# EUROPEAN PATENT APPLICATION

(11) **EP 4 746 354 A2**
(43) Date of publication of application: **20.05.2026**
(21) Application number: 26162093.4
(22) Date of filing: 30.08.2023
(51) Int. Cl.: H04L 9/40

(54) **ANOMALY DETECTION BEFORE BACKUP**

(30) Priority: 31.08.2022 US 202217900661
(62) Divisional of application: 23194288.9
(71) Applicant: Cohesity, Inc., Santa Clara, California 95054 (US)
(72) Inventor: BELL, Jonathan, Santa Clara, 95054 (US); MAYOR, Jonathon, Santa Clara, 95054 (US); MANDAGERE, Nagapramod, Santa Clara, 95054 (US)
(74) Representative: EIP

(57) **Abstract**

An indication to perform a backup of data stored in a persistent storage associated with a source system is received. In response to the indication to perform the backup, current execution information at least in part maintained in a volatile memory is captured. The captured current execution information is analyzed to determine one or more exploitations by malicious software of the source system. The captured current execution information may be caused to be stored with backup data from the backup of the data stored in the persistent storage.

## Description

### BACKGROUND OF THE INVENTION

Malicious software, which may also be referred to as malware, may be included in a file or code stored on a source system. Data associated with the source system (e.g., source system metadata, source system content data) may be backed up to a storage system. As a result, a backup of the source system may include the malicious software. The storage system may receive a request to restore to a destination system the backup of the source system. However, the destination system may become infected with the malicious software after the backup has been restored to the destination system.

### BRIEF DESCRIPTION OF THE DRAWINGS

Various embodiments of the invention are disclosed in the following detailed description and the accompanying drawings.
FIG. 1 is a block diagram illustrating an embodiment of a system for detecting malicious software.
FIG. 2 is a flow diagram illustrating a process for detecting malicious software in accordance with some embodiments.
FIG. 3 is a flow diagram illustrating a process of analyzing current execution information in accordance with some embodiments.
FIG. 4 is a flow diagram illustrating a process of determining potential restore candidates in accordance with some embodiments.
FIG. 5 is a flow diagram illustrating a process for detecting malicious software in accordance with some embodiments.
FIG. 6 is a flow diagram illustrating a process of analyzing current execution information in accordance with some embodiments.

### DETAILED DESCRIPTION

A source system, which may be referred to as a data system, data management system, first system, or primary system, may be running one or more processes at any point in time. The one or more processes running on the source system may change over time. A process table may be configured to provide a real-time or current view of the one or more processes running on the source system and may be consulted at different points in time to determine the processes running on the source system at those times.

Malicious software may be present in the source system. For example, a process may execute at the source system according to a schedule. Malicious software may be attached to the process, such that each time the process is executed, the malicious software awakens. The malicious software may attempt to connect to a network controller, initiate a remote desktop protocol (RDP) connection to another host, spawn one or more child processes, and/or perform one or more other actions. Utilization of the source system or a process of the source system by malicious software to perform a process or action that would not otherwise be performed by the source system may be referred to as an 'exploitation' and may be described as being associated with the source system. Malicious software present in a source system may exploit the source system and/or another host system, such as by initiating and using a remote connection, opening a port, or transmitting data across a network. After awakening and performing one or more processes, the malicious software may return to a dormant state. The malicious software may continue to exploit the host system until it is detected and removed.

Anti-virus software run on a source system may detect malicious software by comparing code included in a file or code being transferred over a network to code known to be associated with or indicative of malicious software. The anti-virus software may be unable to detect the malicious software unless the anti-virus software has been specifically programmed to scan for the code known to be associated with malicious software. Thus, the malicious software may be unable to be removed from a source system until it has been detected. In other words, while anti-virus software may attempt to identify malicious software directly within existing files or code, such anti-virus software may only scan for specific pieces of known malicious software. This may require a database of known malicious software to be maintained, which may occupy valuable storage space. Moreover, such a method may be unable to identify unknown malicious software, while such direct scanning for many pieces of known malicious software may occupy computational resources of a source system and/or may take a long time.

A source system may be backed up to a storage system, which may be referred to as a secondary storage system. Backing up the source system may be referred to as performing a backup of the source system. A backup may be performed according to a predetermined schedule. The predetermined schedule may be determined according to a backup policy. However, the data in the backup of the source system may include the malicious software unless the malicious software has been detected in the source system using, e.g., anti-virus software. Ingesting malicious software into a storage system may compromise the storage system. If the data in the backup is subsequently provided to a destination system, such as the source system or a different system, the destination system may also be compromised by infection with the malicious software.

The disclosed techniques may enable detection, as part of the backup process, of the malicious software or of indications of exploitations of a host system by the malicious software, so that appropriate action may be taken. The techniques may allow prevention of the malicious software from being included in the backup of the source system. The techniques may also provide a more efficient process for detecting malicious software than applying anti-virus software at the source system. Accordingly, the process or processes associated with these techniques may be referred to as a fortified backup, which provides anomaly or exploitation detection. Although the techniques are described with respect to backup, the techniques disclosed herein may be applicable whenever a data management operation (e.g., backup, migration, replication, archive, etc.) is performed for a cohort of data that is provided from a first system to a second system. In examples of data management operations, such as migration or replication, the first and second systems may be the same type of system, so may be a first and second source system or a first and second storage system, or may be different types of system.

In a first technique, the source system may include a backup agent that causes a backup of the source system to be performed. The backup agent determines that the backup is to be performed. The backup agent may receive an indication to perform a backup of data stored in a persistent storage associated with the source system. The persistent storage may be associated with the source system by being part of the source system or connected to the source system via a local connection. For example, the persistent storage may be on-premises storage or network-attached storage. The indication may be received from a storage system. The indication may be received from a user associated with the source system. The backup of data stored in the persistent storage may be a full backup. The backup of data stored in the persistent storage may be an incremental backup. The backup agent may determine that the backup is to be performed based on a backup policy or schedule. Based on a backup schedule, the backup agent may perform backups at regular intervals.

The backup agent captures current execution information associated with the source system that is at least in part maintained in a volatile memory of the source system. The current execution information may be captured directly from the source system and/or from a system connected to the source system. The current execution information may be referred to as 'information', 'information associated with the source system', or 'process information'. Random-access memory ('RAM') may be an example of volatile memory. Volatile memory may be memory that retains stored information while it is powered, in contrast to persistent or non-volatile memory that retains stored information even when powered. The current execution information associated with the source system may include information stored in the volatile memory, one or more process tables, one or more connections and their corresponding status (e.g., active/disabled), one or more current running processes, a list or a plurality of lists of one or more scheduled processes, a log or a plurality of lists of one or more recently executed processes, network status information (e.g., open ports), and the like. The current execution information associated with the source system is captured at one or more points in time associated with the backup. One or more points in time associated with the backup may comprise points in time after determining that the backup is to be performed and may comprise points in time up to a predetermined time after completion of the backup.

The current execution information associated with the source system is captured in response to receiving the indication to perform the backup of data stored in the persistent storage associated with the source system. The current execution information is associated with at least a first point in time. The current execution information may be captured at the first point in time. Capturing such current execution information from volatile memory for a particular point in time provides a view of the processes at the source system at a particular instance. The information from volatile memory may be only available temporarily by virtue of being stored in volatile memory. Therefore, it may be useful to capture the information at regular intervals and in a coherent way so that it may be suitably analyzed. Utilizing the backup process to perform such data capture provides said regularity and coherence.

The current execution information associated with the source system may be captured after initiation of a backup of the data stored in the persistent storage associated with the source system. The current execution information associated with the source system may be captured at one or more additional points in time during the backup of the data stored in the persistent storage associated with the source system. The current execution information associated with the source system may be captured after completion of the backup of the data stored in the persistent storage associated with the source system. Capturing the current execution information after initiation of the backup, or even after completion of the backup, may reduce delays that may otherwise be introduced to the backup of the source system by the capture or analysis (described below) of the current execution information. The capture and analysis of the current execution information may run at least partially concurrently with the backup process. As a result, the data of the source system may be securely backed up whilst it is determined whether malicious software may be present in the data or at the source system, so that action may be taken.

The current execution information associated with the source system captured over a plurality of different points in time may enable the backup agent to determine that an indication of an exploitation associated with the source system detected at a later point in time is related to behavior detected at an earlier point in time. The current execution information associated with source system captured over a plurality of different points in time may enable the backup agent to determine that an indication of an exploitation associated with the source system detected at an earlier point in time is related to behavior detected at a later point in time. In other words, the backup agent may be able to determine one or more indications of an exploitation based on information associated with at least two different points in time, and to determine that the one or more indications are related. The backup agent may be able to determine one or more indications of an exploitation based on information associated with one point in time and may be able to validate or confirm its determination based on information associated with a different point in time. The linking of indications from different points in time or the validation of one or more indications may be used to inform an action performed by the backup agent subsequently.

The backup agent analyzes the captured current execution information to determine whether there are one or more indications of an exploitation by malicious software present in the source system. The exploitation may be an exploitation associated with the source system. The exploitation may be an exploitation of the source system by the malicious software. The exploitation may be an exploitation by the malicious software using the source system. The backup agent may determine, based on the one or more indications, whether there is malicious software in the source system or a likelihood of there being malicious software in the source system. The backup may analyze the captured current execution information to determine whether there are one or more indications that malware or malicious software is present in the source system.

The backup agent may analyze the captured current execution information by comparing the captured current execution information to historical execution information. By comparing the captured current execution information to historical execution information, the backup agent may be able to detect one or more anomalies associated with the captured current execution information. The historical execution information may be associated with a previous full backup and/or one or more previous incremental backups. In other words, execution information may be captured for previous backups. Execution information associated with previous backups may be stored with the backup data for the previous backups. The execution information may be stored with the backup data with or without analysis to determine whether one or more indications of an exploitation associated with the source system are present in the execution information. When a subsequent backup is performed, the execution information from at least one of the previous backups may form the historical execution information. Alternatively, the backup agent may analyze the captured current execution information in isolation.

The historical execution information may be compared to the current execution information in a number of different ways. One or more values determined for a current backup may be determined based on the current execution information and may be compared to one or more values of one or more previous backups based on historical execution information. A ratio between two values associated with the current backup may be determined from the current execution information. The ratio diverging from a historical ratio by more than a threshold amount may indicate the source system is being exploited by malicious software. For example, the ratio between a data change rate associated with an incremental backup to the number of processes running during the backup may have increased more than a threshold amount from a historical ratio. A relationship between two values associated with the backup may be determined from the current execution information. The relationship may be compared to a corresponding historical relationship. The relationship diverging from the corresponding historical relationship may indicate that the source system is being exploited by malicious software. For example, a data change rate associated with a backup may be more than a historical change rate by a threshold amount and a port that is normally closed is open during the backup. A process spawning more child processes than historical spawned child processes may indicate that the source system is being exploited by malicious software. For example, a process may normally spawn 10 child processes, but the process table indicates that the process spawned 100 child processes.

The backup agent may obtain external threat information from a third party system (e.g., VirusTotal, etc.). The external threat information may indicate one or more known indications of an exploitation. The backup agent may analyze the current captured execution information in light of the external threat information.

Capturing the current execution information associated with the source system at one or more points in time associated with a backup may allow the backup agent to determine whether there are one or more indications of an exploitation associated with the source system. The backup agent may determine that there are one or more indications of an exploitation associated with the source system based on the current execution information associated with the source system captured at a single point in time. The backup agent may determine that there are one or more indications of an exploitation associated with the source system based on the current execution information associated with the source system captured over a plurality of different points in time. The current execution information associated with the source system captured over the plurality of different points in time may enable the backup agent to determine that an indication of an exploitation associated with the source system detected at a later point in time is related to behavior detected at an earlier point in time.

The backup agent may capture and analyze the current execution information, and, having performed the analysis, may determine whether the backup is still in progress. If the backup is still in progress, the backup agent may be configured to repeat the capture and analysis steps. Repetition of these steps may enable the backup agent to detect and confirm indications of exploitations over time, as indicated above, and/or may allow for different indications of exploitations to be identified, as different processes may be being executed by the source system at different times during the backup. Moreover, capturing the current execution information over a plurality of different times across the backup may provide more data for use as historical execution information.

The backup agent may determine whether there are one or more indications of an exploitation associated with the source system using a model, such as a machine learning model, a rules-based model, a heuristic model, etc. The backup agent may update the model over time based on the execution information associated with the source system. For example, the current execution information associated with the source system may be included in the historical execution information associated with the source system. A moving average of a feature included in the model may be updated after each backup. The moving average may be updated based on the current execution information. In other words, the machine learning model may be trained based on data obtained from the source system according to the techniques described herein. Some embodiments may therefore be considered to be methods by which training data for a machine learning model is obtained utilizing an existing backup process. A method may comprise determining that a backup is to be performed, capturing the current execution information in response to determining that the backup is to be performed, storing or causing the current execution information to be stored, and using the stored current execution information to train a machine learning model.

The backup agent may determine that there are one or more indications of an exploitation associated with the source system. The backup agent may perform an action based on determining that there are one or more indications of an exploitation associated with the source system. The backup agent may provide a notification indicating the source system is potentially infected with malicious software. The notification (e.g., an alarm) may be provided to an external system. As a further example, the action performed by the backup agent may comprise altering a backup workflow. Altering the backup workflow may include tagging the backup as being suspicious, storing the backup in a sandbox environment, providing the backup to a remediation system, pausing or stopping a backup flow associated with performing the backup of the data stored in storage, etc. The backup may be stored in a different environment or system, such as the sandbox environment or the remediation system, for subsequent analysis to identify and remove the malicious software and/or to patch one or more vulnerabilities or the indicated exploitation(s). Once appropriate action has been taken at the different environment or system, the backup can be stored at the storage system. The backup agent may be configured to cancel one or more scheduled child processes associated with an exploitive parent process before the one or more scheduled child processes are initiated. The backup agent may cancel the one or more scheduled child processes based on determining one or more indications associated with the exploitative parent process. The backup agent may tag a backup with context information (threat actor, common vulnerability and exposure (CVE) that enables a person to understand why the backup is tagged. The storage system may stop ingesting data associated with the backup or terminates connection.

The backup agent may determine that there are no indications of an exploitation associated with the source system. The backup agent may perform an action based on determining that there are no indications of an exploitation associated with the source system. The storage system may ingest and store the data stored in the persistent storage along with the captured current execution information. The backup agent may tag the backup as being a clean backup. The tag may also include the date at which the backup was performed.

In a second technique, a storage system may perform the process of capturing and analyzing the current execution information rather than a backup agent at a source system. Unless indicated otherwise, features described above in relation to the backup agent and its performance of the described process may also be applicable when the process is performed by the storage system.

In the second technique, the storage system sends the source system a command to perform a backup. The backup may be a full backup or an incremental backup. The storage system obtains the current execution information associated with the source system. The current execution information may be obtained via an application program interface (API) call to the source system.

The current execution information associated with the source system may be obtained prior to sending the command to perform the backup. The current execution information associated with the source system may be obtained after a backup of the source system is initiated. The current execution information associated with the source system may be obtained at one or more additional points in time during the backup of the data stored in the persistent storage associated with the source system. The current execution information associated with the source system may be obtained after completion of the backup of the data stored in the persistent storage associated with the source system. The current execution information associated with the source system obtained over a plurality of different points in time may enable the storage system to determine that an indication of an exploitation associated with the source system detected at a later point in time is related to behavior detected at an earlier point in time. The current execution information associated with source system captured over a plurality of different points in time may enable the storage system to determine that an indication of an exploitation associated with the source system detected at an earlier point in time is related to behavior detected at a later point in time. The storage system may cancel one or more scheduled child processes associated with an exploitive parent process, via an API call, before the one or more scheduled child processes are initiated.

The storage system analyzes the obtained current execution information to determine whether there are one or more indications of an exploitation associated with the source system. The storage system may analyze the obtained current execution information by comparing the obtained current execution information to historical execution information to detect one or more anomalies associated with the obtained current execution information. The historical execution information may be associated with a previous full backup and/or one or more previous incremental backups.

The storage system may obtain external threat information from a third party system (e.g., VirusTotal, etc.). The storage system may analyze the current captured execution information in light of the external threat information.

Obtaining the current execution information associated with the source system at one or more points in time associated with a backup may allow the storage system to determine whether there are one or more indications of an exploitation associated with the source system. The storage system may determine that there are one or more indications of an exploitation associated with the source system based on the current execution information associated with the source system captured at a single point in time. The storage system may determine that there are one or more indications of an exploitation associated with the source system based on the current execution information associated with the source system captured over a plurality of different points in time. The current execution information associated with the source system captured over the plurality of different points in time may enable the storage system to determine that an indication of an exploitation associated with the source system detected at a later point in time is related to behavior detected at an earlier point in time.

The storage system may determine whether there are one or more indications of an exploitation associated with the source system using a model, such as a machine learning model, a rules-based model, a heuristic model, etc. The storage system may update the model over time based on the execution information associated with the source system. For example, the current execution information associated with the source system may be included in the historical execution information associated with the source system. A moving average of a feature included in the model may be updated after each backup.

The storage system may determine that there are one or more indications of an exploitation associated with the source system. The storage system may provide to the source system or a third party system a notification indicating the source system is potentially infected with malicious software. The storage system may send to the source system a command to alter a workflow associated with the backup.

The storage system may determine that there are no indications of an exploitation associated with the source system. The storage system may ingest and store the data stored in the persistent storage along with the captured current execution information.

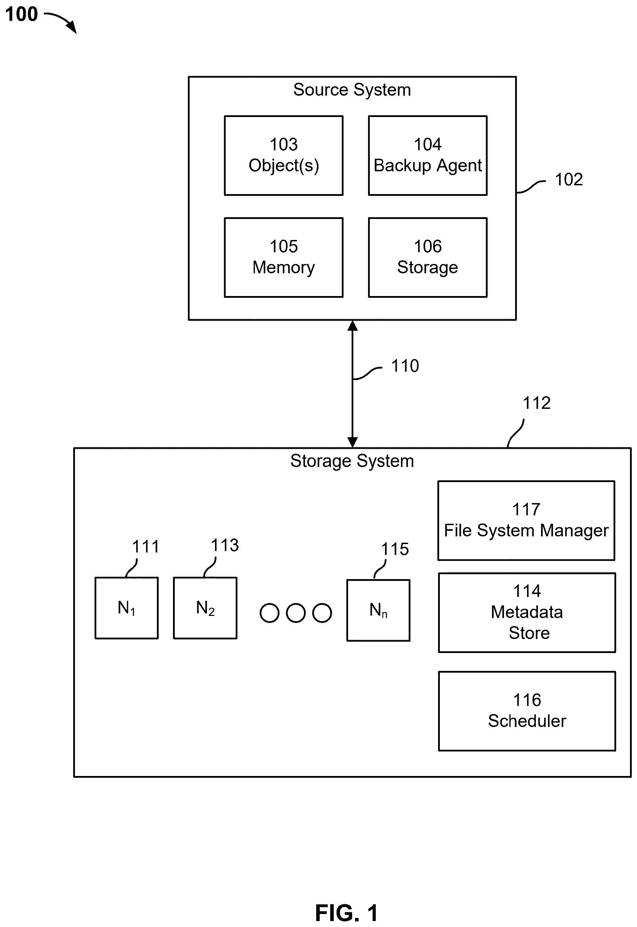

FIG. 1 is a block diagram illustrating an embodiment of a system for detecting malicious software. In the example shown, system 100 includes source system 102 coupled to storage system 112 via connection 110. Connection 110 may be a wired or wireless connection. Connection 110 may be a LAN, WAN, intranet, the Internet, and/or a combination thereof.

Source system 102 may be a computing system that stores file system data. The file system data may include a plurality of files (e.g., content files, text files, etc.) and metadata associated with the plurality of files. Source system 102 may be comprised of one or more servers, one or more computing devices, one or more storage devices, and/or a combination thereof.

Source system 102 may be configured to run one or more objects 103. Examples of objects include, but are not limited to, a virtual machine, a database, an application, a container, a pod, etc. Source system 102 includes storage 106 that may be configured to store file system data associated with source system 102. Storage 106 is persistent storage. The file system data associated with source system 102 may include the data associated with the one or more objects 103.

Backup agent 104 may be configured to cause source system 102 to perform a backup (e.g., a full backup or incremental backup). A full backup may include all of the file system data of source system 102 at a particular moment in time. In some embodiments, a full backup for a particular object of the one or more objects 103 may be performed and the full backup of the particular object may include all of the object data associated with the particular object at a particular moment in time. An incremental backup may include all of the file system data of source system 102 that has not been backed up since a previous backup. In some embodiments, an incremental backup for a particular object of the one or more objects 103 may be performed and the incremental backup of the particular object may include all of the object data associated with the particular object that has not been backed up since a previous backup.

In some embodiments, backup agent 104 may be running on source system 102. In some embodiments, backup agent 104 may be running in one of the one or more objects 103. In some embodiments, a backup agent 104 may be running on source system 102 and a separate backup agent 104 may be running in one of the one or more object 103. In some embodiments, an object may include a backup function and may be configured to perform a backup on its own without backup agent 104. In some embodiments, source system 102 may include a backup function and is configured to perform a backup on its own without backup agent 104. In some embodiments, storage system 112 may provide instructions to source system 102, causing source system 102 to execute backup functions without backup agent 104.

Backup agent 104 may cause a backup of source system 102 to be performed. Backup agent 104 may receive an indication to perform a backup of data stored in storage 106. In some embodiments, the indication may be received from storage system 112 via scheduler 116. In some embodiments, the indication may be received from a user associated with source system 102. In some embodiments, the backup of data stored in storage 106 may be a full backup. In some embodiments, the backup of data stored in storage 106 may be an incremental backup.

Backup agent 104 may be configured to capture current execution information associated with source system 102 that is at least maintained in memory 105. The current execution information associated with source system 102 may include information in memory 105, process tables, one or more connections and their corresponding status (active/disabled), one or more current running processes, a list of one or more scheduled processes, a log of one or more recently executed processes, network status information (e.g., open ports, closed ports), etc. Memory 105 is volatile memory. The current execution information associated with source system 102 may be captured at one or more points in time associated with a backup. The current execution information associated with source system 102 is captured in response to receiving the indication to perform the backup of data stored in storage 106. In some embodiments, the current execution information associated with source system 102 may be captured after an initiation of a backup of the data stored in storage 106. In some embodiments, the current execution information associated with source system 102 may be captured at one or more additional points in time during the backup of the data stored in storage 106. In some embodiments, the current execution information associated with source system 102 may be captured after a completion of the backup of the data stored in storage 106.

Backup agent 104 may be configured to analyze the captured current execution information to determine whether there are one or more indications of an exploitation associated with source system 102. Backup agent 104 may analyze the captured current execution information by comparing the captured current execution information to historical execution information to detect one or more anomalies associated with the captured current execution information. The historical execution information may be associated with a previous full backup and/or one or more previous incremental backups.

A ratio between two values associated with the backup diverging from a historical ratio more than a threshold amount may indicate source system 102 is being exploited by malicious software. For example, the ratio between a data change rate associated with an incremental backup to the number of processes running during the backup may have increased more than a threshold amount from a historical ratio. A relationship between two values associated with the backup diverging from a historical relationship may indicate that source system 102 is being exploited by malicious software. For example, a data change rate associated with a backup may be more than a historical change rate by a threshold amount and a port that is normally closed is open during the backup. A process spawning more child processes than historical spawned child processes may indicate that source system 102 is being exploited by malicious software. For example, a process may normally spawn 10 child processes, but the process table indicates that the process spawned 100 child processes. The current number of open ports may be compared to a historical number of open ports. In some embodiments, backup agent 104 may determine statistics for all network connections (e.g., via netstat) to determine whether a destination or source for network traffic is associated with a nefarious actor.

Backup agent 104 may analyze the captured current execution information by comparing the captured current execution information to known sources for threat identification (e.g., VirusTotal, etc.) to detect one or more anomalies associated with the captured current execution information.

Capturing the current execution information associated with source system 102 at one or more points in time may allow the backup agent to determine whether there are one or more indications of an exploitation associated with the source system. In some embodiments, backup agent 102 may determine that there are one or more indications of an exploitation associated with source system 102 based on the current execution information associated with source system 102 captured at a single point in time. In some embodiments, backup agent 104 may determine that there are one or more indications of an exploitation associated with source system 102 based on the current execution information associated with source system 102 captured over a plurality of different points in time. In some embodiments, the current execution information associated with source system 102 captured over the plurality of different points in time may enable backup agent 104 to determine that an indication of an exploitation associated with source system 102 detected at a later point in time is related to behavior detected at an earlier point in time. In some embodiments, the current execution information associated with source system 102 captured over the plurality of different points in time may enable backup agent 104 to determine that an indication of an exploitation associated with source system 102 detected at an earlier point in time is related to behavior detected at a later point in time. Backup agent 104 may be configured to cancel one or more scheduled child processes associated with an exploitive parent process before they are initiated.

Backup agent 104 may determine whether there are one or more indications of an exploitation associated with source system 102 using a model, such as a machine learning model, a rules-based model, a heuristic model, etc. The machine learning model may be trained using a supervised machine learning algorithm. For example, the supervised machine learning algorithm may be a linear regression algorithm, a logistical regression algorithm, a random forest algorithm, a gradient boosted trees algorithm, a support vector machines algorithm, a neural networks algorithm, a decision tree algorithm, a Naive Bayes algorithm, a nearest neighbor algorithm, or any other type of supervised machine learning algorithm. In some embodiments, the machine learning model may be trained using a semi-supervised machine learning algorithm that utilizes one or more labeled data sets and one or more pseudo-labeled data sets. In some embodiments, the machine learning model may be trained using a reinforcement machine learning algorithm. For example, the reinforcement machine learning algorithm may be a Q-Learning algorithm, a temporal difference algorithm, a Monte-Carlo tree search algorithm, an asynchronous actor-critic agent's algorithm, or any other type of reinforcement machine learning algorithm. In some embodiments, the machine learning model may be trained using an unsupervised machine learning algorithm. For example, clustering methods, anomaly detection, neural network, etc.

In some embodiments, backup agent 104 may determine that there are one or more indications of an exploitation associated with source system 102. Backup agent 104 may be configured to provide a notification indicating source system 102 is potentially infected with malicious software. The notification may be provided to a user associated with source system 102 via a graphical user interface associated with source system 102. In some embodiments, the notification may be provided to an external system (e.g., an external security system). In some embodiments, the notification may be provided to storage system 112. In response to the notification, backup agent 104 may be configured to alter a backup workflow. Altering the backup workflow may include tagging the backup as being suspicious, storing the backup in a sandbox environment, providing the backup to a remediation system, pausing or stopping a backup flow associated with performing the backup of the data stored in storage 106, etc. Backup agent 104 may tag a backup with context information (threat actor, common vulnerability and exposure (CVE) that enables a person to understand why the backup is tagged. In some embodiments, storage system 112 may stop ingesting data associated with the backup or may terminate connection 110.

In some embodiments, backup agent 104 may determine that there are no indications of an exploitation associated with the source system. Backup agent 104 may tag the backup as being a clean backup. The tag may also include the date at which the backup was performed. Storage system 112 may ingest and store the data stored in storage 106 along with the captured current execution information.

In some embodiments, storage system 112 may be configured to send to source system 102 a command to perform a backup. The backup may be a full backup or an incremental backup. Storage system 112 may be configured to obtain the current execution information associated with source system 102 that is at least maintained in memory 105 via an API call to source system 102.

In some embodiments, the current execution information associated with source system 102 may be obtained prior to sending the command to perform the backup. In some embodiments, the current execution information associated with source system 102 may be obtained after a backup of source system 102 is initiated. In some embodiments, the current execution information associated with source system 102 may be obtained at one or more additional points in time during the backup of the data stored in the persistent storage associated with source system 102. In some embodiments, the current execution information associated with source system 102 may be obtained after completion of the backup of the data stored in the persistent storage associated with source system 102. In some embodiments, the current execution information associated with source system 102 obtained over a plurality of different points in time may enable storage system 112 to determine that an indication of an exploitation associated with source system 102 detected at a later point in time is related to behavior detected at an earlier point in time. In some embodiments, the current execution information associated with source system 102 captured over a plurality of different points in time may enable storage system 112 to determine that an indication of an exploitation associated with source system 102 detected at an earlier point in time is related to behavior detected at a later point in time. Storage system 112 may cancel one or more scheduled child processes associated with an exploitive parent process, via an API call, before the one or more scheduled child processes are initiated.

Storage system 112 may be configured to analyze the obtained current execution information to determine whether there are one or more indications of an exploitation associated with source system 102. Storage system 112 may analyze the obtained current execution information by comparing the obtained current execution information to historical execution information to detect one or more anomalies associated with the obtained current execution information.

Storage system 112 may obtain external threat information from a third party system (e.g., VirusTotal, etc.). In some embodiments, storage system 112 may analyze the current captured execution information in light of the external threat information. Obtaining the current execution information associated with source system 102 at one or more points in time associated with a backup may allow storage system 112 to determine whether there are one or more indications of an exploitation associated with source system 102. In some embodiments, storage system 112 may determine that there are one or more indications of an exploitation associated with source system 102 based on the current execution information associated with source system 102 captured at a single point in time. In some embodiments, storage system 112 may determine that there are one or more indications of an exploitation associated with source system 102 based on the current execution information associated with source system 102 captured over a plurality of different points in time. In some embodiments, the current execution information associated with source system 102 captured over the plurality of different points in time may enable storage system 112 to determine that an indication of an exploitation associated with source system 102 detected at a later point in time is related to behavior detected at an earlier point in time.

Storage system 112 may be configured to determine whether there are one or more indications of an exploitation associated with source system 102 using a model, such as a machine learning model, a rules-based model, a heuristic model, etc. The machine learning model may be trained using a supervised machine learning algorithm, a semi-supervised machine learning algorithm, or an unsupervised machine learning algorithm. Storage system 112 may update the model over time based on the execution information associated with source system 102.

In some embodiments, storage system 112 may determine that there are one or more indications of an exploitation associated with source system 102. Storage system 112 may provide to source system 102 or a third party system a notification indicating that source system 102 is potentially infected with malicious software. In some embodiments, storage system 112 may send to source system 102 a command to alter a workflow associated with the backup. Altering the backup workflow may include tagging the backup as being suspicious, storing the backup in a sandbox environment, providing the backup to a remediation system, pausing or stop a backup flow associated with performing the backup of the data stored in storage 106, etc. Storage system 112 may tag with context information (threat actor, common vulnerability and exposure (CVE) that enables a person to understand why the backup is tagged.

In some embodiments, storage system 112 may determine that there are no indications of an exploitation associated with source system 102. Storage system 112 may ingest and store the data stored in the persistent storage along with the captured current execution information.

Storage system 112 is comprised of a storage cluster that includes a plurality of storage nodes 111, 113, 115. Although three storage nodes are shown, storage system 112 may be comprised of n storage nodes.

In some embodiments, the storage nodes may be homogenous nodes where each storage node has the same capabilities (e.g., processing, storage, memory, etc.). In some embodiments, at least one of the storage nodes may be a heterogeneous node with different capabilities (e.g., processing, storage, memory, etc.) than the other storage nodes of storage system 112.

In some embodiments, a storage node of storage system 112 may include a processor, memory, and a plurality of storage devices. The plurality of storage devices may include one or more solid state drives, one or more hard disk drives, or a combination thereof.

In some embodiments, a storage node of storage system 112 may include a processor and memory, and may be coupled to a separate storage device. The separate storage device may include one or more storage devices (e.g., flash storage devices). A storage device may be segmented into a plurality of partitions. Each of the storage nodes 111, 113, 115 may be allocated one or more of the partitions. The one or more partitions allocated to a storage node may be configured to store data associated with some or all of the plurality of objects that were backed up to storage system 112. For example, the separate storage device may be segmented into 10 partitions and storage system 112 may include 10 storage nodes. A storage node of the 10 storage nodes may be allocated one of the 10 partitions.

In some embodiments, a storage node of storage system 112 may include a processor, memory, and a storage device. The storage node may be coupled to a separate storage device. The separate storage device may include one or more storage devices. A storage device may be segmented into a plurality of partitions. Each of the storage nodes 111, 113, 115 may be allocated one or more of the partitions. The one or more partitions allocated to a storage node may be configured to store data associated with some or all of the plurality of objects that were backed up to storage system 112. For example, the separate storage device may be segmented into 10 partitions and storage system 112 may include 10 storage nodes. A storage node of the 10 storage nodes may be allocated one of the 10 partitions.

Storage system 112 may be a cloud instantiation of a storage system. A configuration of cloud instantiation of storage system 112 may be a virtual replica of a storage system. For example, a storage system may be comprised of three storage nodes, each storage node with a storage capacity of 10 TB. A cloud instantiation of the storage system may be comprised of three virtual nodes, each virtual node with a storage capacity of 10 TB. In other embodiments, a cloud instantiation of a storage system may have more storage capacity than an on-premises instantiation of a storage system. In other embodiments, a cloud instantiation of a storage system may have less storage capacity than an on-premises instantiation of storage system.

Storage system 112 may include a file system manager 117 that is configured to organize the file system data of the backup using a tree data structure. An example of the tree data structure is a snapshot tree, which may be based on a B+ tree structure (or other type of tree structure in other embodiments). Storage system 112 may store a plurality of tree data structures in metadata store 114, which is accessible by storage nodes 111, 113, 115. Metadata store 114 may be stored in one or more memories of the storage nodes 111, 113, 115. Storage system 112 may generate a snapshot tree and one or more metadata structures for each backup.

In the event the backup corresponds to all of the file system data of source system 102, a view corresponding to the backup may be comprised of a snapshot tree and one or more object metadata structures. The snapshot tree may be configured to store the metadata associated with source system 102. An object metadata structure may be configured to store the metadata associated with one of the one or more objects 103. Each of the one or more objects 103 may have a corresponding metadata structure.

In the event the backup corresponds to all of the object data of one of the one or more objects 103 (e.g., a backup of a virtual machine), a view corresponding to the backup may be comprised of a snapshot tree and one or more object file metadata structures. The snapshot tree may be configured to store the metadata associated with one of the one or more objects 103. An object file metadata structure may be configured to store the metadata associated with an object file included in the object.

The tree data structure may be used to capture different views of data. A view of data may correspond to a full backup, an incremental backup, a clone of data, a file, a replica of a backup, a backup of an object, a replica of an object, a tiered object, a tiered file, etc. The tree data structure may allow a chain of snapshot trees to be linked together by allowing a node of a later version of a snapshot tree to reference a node of a previous version of a snapshot tree. For example, a root node or an intermediate node of a snapshot tree corresponding to a second backup may reference an intermediate node or leaf node of a snapshot tree corresponding to a first backup.

A snapshot tree may be a representation of a fully hydrated restoration point because it provides a complete view of source system 102, an object 103, or data generated on or by the storage system 112 at a particular moment in time. A fully hydrated restoration point is a restoration point that is ready for use without having to reconstruct a plurality of backups to use it. Instead of reconstructing a restoration point by starting with a full backup and applying one or more data changes associated with one or more incremental backups to the data associated with the full backup, storage system 112 may maintain fully hydrated restoration points. Any file associated with source system 102, an object at a particular time and the file's contents, or a file generated on or by storage system 112, for which there is an associated reference restoration point, may be determined from the snapshot tree, regardless if the associated reference restoration was a full reference restoration point or an intermediate reference restoration point.

A snapshot tree may include a root node, one or more levels of one or more intermediate nodes associated with the root node, and one or more leaf nodes associated with an intermediate node of the lowest intermediate level. The root node of a snapshot tree may include one or more pointers to one or more intermediate nodes. Each intermediate node may include one or more pointers to other nodes (e.g., a lower intermediate node or a leaf node). A leaf node may store file system metadata, data associated with a file that is less than a limit size, an identifier of a data brick, a pointer to a metadata structure (e.g., object metadata structure or an object file metadata structure), a pointer to a data chunk stored on the storage cluster, etc.

A metadata structure (e.g., object file metadata structure, object metadata structure, file metadata structure) may include a root node, one or more levels of one or more intermediate nodes associated with the root node, and one or more leaf nodes associated with an intermediate node of the lowest intermediate level. The tree data structure associated with a metadata structure may allow a chain of metadata structures corresponding to different versions of an object, an object file, or a file to be linked together by allowing a node of a later version of a metadata structure to reference a node of a previous version of a metadata structure. A leaf node of a metadata structure may store information, such as an identifier of a data brick associated with one or more data chunks and information associated with the one or more data chunks.

Storage system 112 may maintain metadata that are stored in metadata store 114, such as a chunk metadata data structure, a chunk file metadata data structure, and a brick data structure. The chunk metadata data structure may be comprised of a plurality of entries. Each entry may associate a chunk identifier corresponding to a data chunk with a chunk file identifier corresponding to a chunk file storing the data chunk. The chunk file metadata data structure may be comprised of a plurality of entries. Each entry may associate a chunk file identifier corresponding to a chunk file with one or more chunk identifiers corresponding to one or more data chunks. This indicates the one or more data chunks that are stored in the chunk file having the chunk file identifier. Storage system 112 may store a plurality of chunk files for one or more storage tenants. The data stored by storage system 112 may be deduplicated across the one or more storage tenants.

The tree data structure may include a plurality of nodes that are associated with corresponding data bricks. A data brick may be associated with one or more data chunks. A size of a fixed-size data chunk may be the same size as a data brick, e.g., a size of a data brick is 256 kb - 512 kb. The one or more data chunks associated with the data brick may each have a size of 8 kb - 16 kb. The brick metadata data structure may be comprised of a plurality of entries. Each entry may correspond to a data brick and associates a brick identifier corresponding to the data brick with a chunk identifier corresponding to the one or more data chunks associated with the data brick.

Storage system 112 may include scheduler 116 that determines a backup of one or more objects 103 associated with source system 102 is to be performed. The one or more objects 103 associated with source system 102 may include one or more objects that were previously backed up to storage system 112 and/or one or more new objects that were not previously backed up to the storage system. In some embodiments, a full back up of an object may be determined to be performed. In some embodiments, an incremental back up of the object may be determined to be performed.

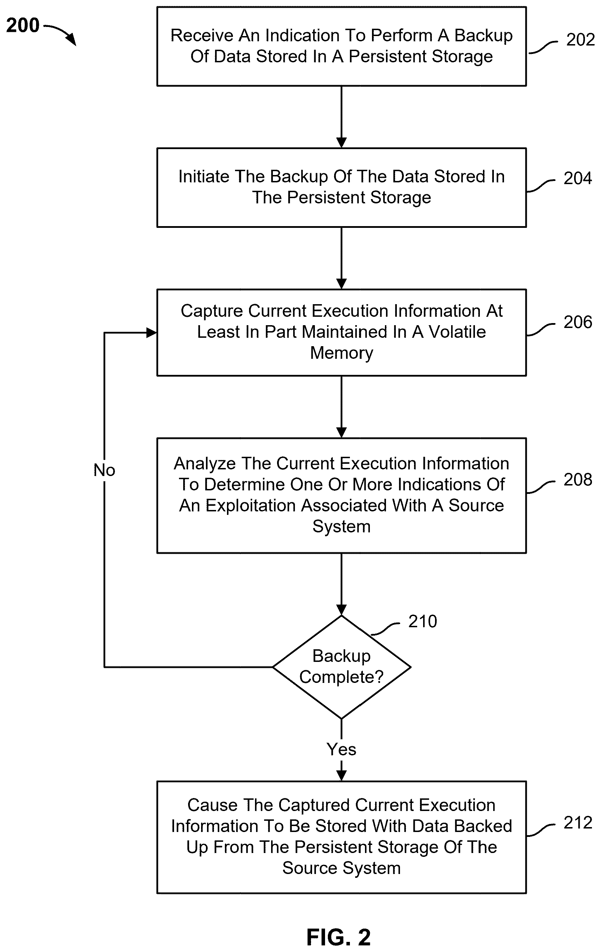

FIG. 2 is a flow diagram illustrating a process for detecting malicious software in accordance with some embodiments. In the example shown, process 200 may be implemented by a backup agent, such as backup agent 104.

At 202, an indication to perform a backup of data stored in a persistent storage is received. In some embodiments, the indication may be received from a storage system. In some embodiments, the indication may be received from a user associated with the source system.

At 204, the backup of the data stored in the persistent storage is initiated. In some embodiments, the backup of data stored in the persistent storage may be a full backup. In some embodiments, the backup of data stored in the persistent storage may be an incremental backup.

At 206, current execution information maintained at least in part in a volatile memory is captured. The backup agent captures the current execution information associated with the source system that is at least maintained in a volatile memory of the source system. The current execution information associated with the source system may include information in the volatile memory, process tables, one or more connections and their corresponding status (active/disabled), one or more current running processes, a list of one or more scheduled processes, a log of one or more recently executed processes, network status information (e.g., open ports), etc.

The current execution information associated with the source system may be captured at one or more points in time during the backup. In some embodiments, the current execution information associated with the source system may be captured in response to receiving the indication to perform the backup of data stored in the persistent storage associated with the source system. In some embodiments, the current execution information associated with the source system may be captured after an initiation of a backup of the data stored in the persistent storage associated with the source system. In some embodiments, the current execution information associated with the source system may be captured at one or more additional points in time during the backup of the data stored in the persistent storage associated with the source system. In some embodiments, the current execution information associated with the source system may be captured after completion of the backup of the data stored in the persistent storage associated with the source system.

In some embodiments, step 206 may be performed before step 204. In some embodiments, step 206 may be performed in parallel with step 204.

At 208, the current execution information is analyzed to determine one or more indications of an exploitation associated with the source system. The backup agent may analyze the captured current execution information to determine whether there are one or more indications of an exploitation associated with the source system. In some embodiments, external threat information may be obtained from known sources for threat identification (e.g., VirusTotal, etc.). The threat identification may be used with the current execution information to determine if the source system is being exploited. For example, the external threat information may indicate that a particular port is associated with a threat and the current execution information may indicate that the particular port is open.

At 210, it is determined whether a backup of the source system is complete. In response to a determination that the backup of the source is not complete, process 200 may return to 206 where the current execution information is captured at an additional point in time. In response to a determination that the backup system of the source system is complete, process 200 may proceed to step 212. In some embodiments, step 210 is optional.

At 212, the captured current execution is caused to be stored with data backed up from the persistent storage of the source system.

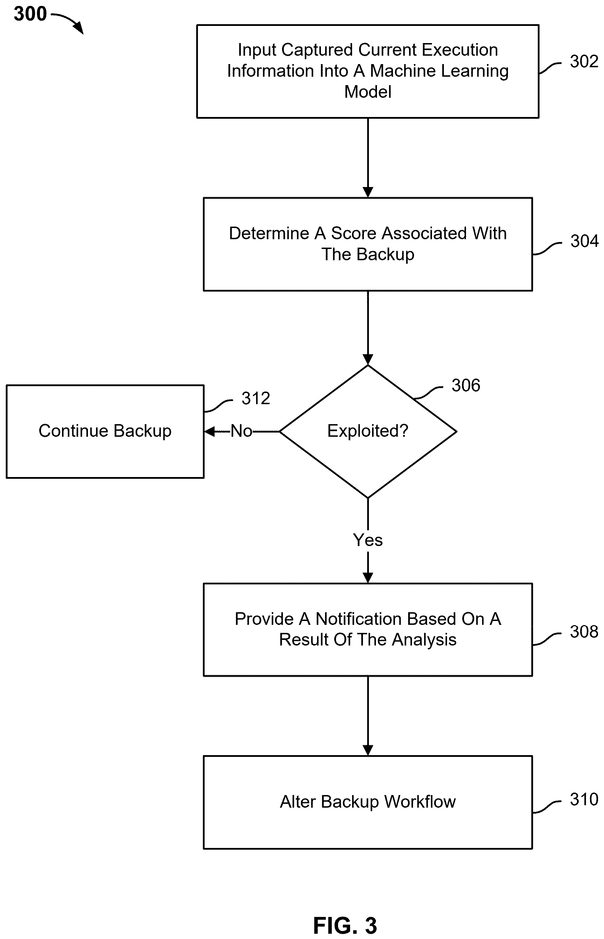

FIG. 3 is a flow diagram illustrating a process of analyzing current execution information in accordance with some embodiments. In the example shown, process 300 may be implemented by a backup agent, such as backup agent 104. In some embodiments, process 300 may be implemented to perform some or all of step 208 of process 200.

At 302, captured current execution information is inputted into a machine learning model. The machine learning model may be trained using a supervised machine learning algorithm. For example, the supervised machine learning algorithm may be a linear regression algorithm, a logistical regression algorithm, a random forest algorithm, a gradient boosted trees algorithm, a support vector machines algorithm, a neural networks algorithm, a decision tree algorithm, a Naive Bayes algorithm, a nearest neighbor algorithm, or any other type of supervised machine learning algorithm. In some embodiments, the machine learning model may be trained using a semi-supervised machine learning algorithm that utilizes one or more labeled data sets and one or more pseudo-labeled data sets. In some embodiments, the machine learning model may be trained using a reinforcement machine learning algorithm. For example, the reinforcement machine learning algorithm may be a Q-Learning algorithm, a temporal difference algorithm, a Monte-Carlo tree search algorithm, an asynchronous actor-critic agent's algorithm, or any other type of reinforcement machine learning algorithm. In some embodiments, the machine learning model may be trained using an unsupervised machine learning algorithm. For example, clustering methods, anomaly detection, neural network, etc.

At 304, a score associated with the backup is determined. The machine learning model may output the score associated with the backup based on the captured current execution information. The backup agent or the storage system may receive the score.

At 306, it is determined whether the score associated with the backup indicates the source system has been exploited. The score associated with the backup may be compared to an exploitation threshold score. In response to a determination that the score indicates the source system has been exploited (e.g., the score associated with the backup is greater than the exploitation threshold score), process 300 may proceed to 308. In response to a determination that the score does not indicate that the source system has been exploited (e.g., the score associated with the backup is not greater than the exploitation threshold score), process 300 may proceed to 312.

In some embodiments, the score may indicate the source system has been exploited in the event the score associated with the backup is greater than the exploitation threshold score and the score may indicate the source system has not been exploited in the event the score associated with the backup is not greater than the exploitation threshold score.

At 308, a notification based on a result of the analysis is provided. The notification may be provided to a user associated with the source system via a graphical user interface associated with the source system. In some embodiments, the notification may be provided to an external system. In some embodiments, the notification may be provided to the storage system. In response to the notification, storage system may stop ingesting data associated with the backup or terminate a connection with the source system. In some embodiments, the backup may be flagged to indicate that it may have been subject to malicious software.

At 310, the backup workflow is altered based on a policy. In some embodiments, the policy may indicate that the backup is flagged as being suspicious. In some embodiments, the policy may indicate that a storage destination for the backup is to be modified from the storage system to a sandbox environment. In some embodiments, the policy may indicate that backup is to be paused. In some embodiments, the policy may indicate the backup is to be stored at a remediation system instead of the storage system.

In some embodiments, step 310 is optional.

At 312, a backup workflow is continued.

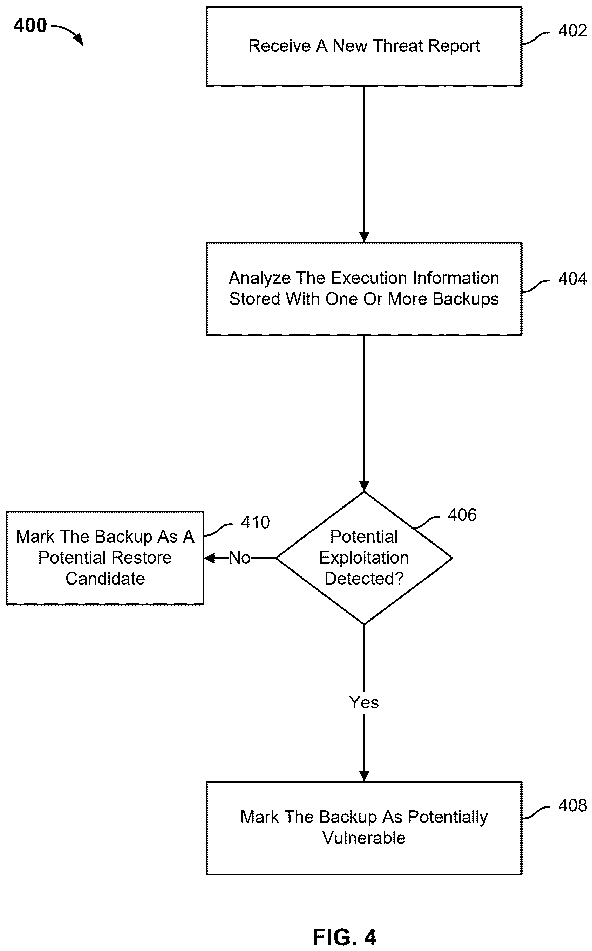

FIG. 4 is a flow diagram illustrating a process of determining potential restore candidates in accordance with some embodiments. In the example shown, process 400 may be implemented by a storage system, such as storage system 112. Process 400 may enable a backup to be scanned for vulnerabilities without requiring a restoration or a full scan of the backup. As a result, time and computing resources of the storage system may be conserved.

At 402, a new threat report is received. The new threat report may be received from a third party, such as the Internet Storm Center or VirusTotal. The new threat report may indicate one or more internet protocol (IP) addresses and/or ports associated with malicious software.

At 404, execution information stored with one or more backups is analyzed. In some embodiments, the storage system may utilize the execution information stored with the backup to determine, at a time associated with a backup of the source system, whether the source system had a connection with any of the one or more IP addresses included in the new threat report. In some embodiments, the storage system may utilize the execution information stored with the backup to determine, at a time associated with a backup of the source system, whether the source system had an open port as indicated by the new threat report.

In some embodiments, the storage system may utilize the execution information stored with a plurality of backups to determine when certain changes were made to the execution information. For example, the storage system may determine which backup of the plurality of backups indicates that a source system started to have a connection with any of the one or more IP addresses included in the new threat report. The storage system may determine which backup of the plurality of backups indicates that a port of the source system changed from a closed state to an open state.

At 406, it is determined whether a potential exploitation is detected. In some embodiments, a score associated with stored execution information for a backup may be determined. In some embodiments, a score associated with stored execution information for a plurality of backups may be determined. A machine learning model associated with the storage system may output the score associated with the backup based on the execution information stored with the backup and the new threat report. The new score may be stored with the backup. A potential exploitation may be detected in the event the score associated with the stored execution information is greater than an exploitation threshold score. In some embodiments, the exploitation threshold score may be a static threshold score. In some embodiments, the exploitation threshold score may be a dynamic threshold score.

In some embodiments, the values associated with the execution information may be mapped to a feature space. For a plurality of normal backups, the values associated with the execution information may cluster near a particular area in the feature space. A potential exploitation may be detected in the event the values associated with the execution information are a threshold distance away from a centroid of the cluster.

In some embodiments, the score associated with the stored execution information may be compared to a historical score of the stored execution information. A potential exploitation may be detected in the event the score associated with the stored execution information diverges from the historical score of the stored execution information by a threshold amount.

In response to a determination that a potential exploitation was detected, process 400 may proceed to 408. In response to a determination that a potential exploitation was not detected, process 400 may proceed to 410.

At 408, the backup is marked as being potentially vulnerable.

At 410, the backup is marked as being a potential restore candidate.

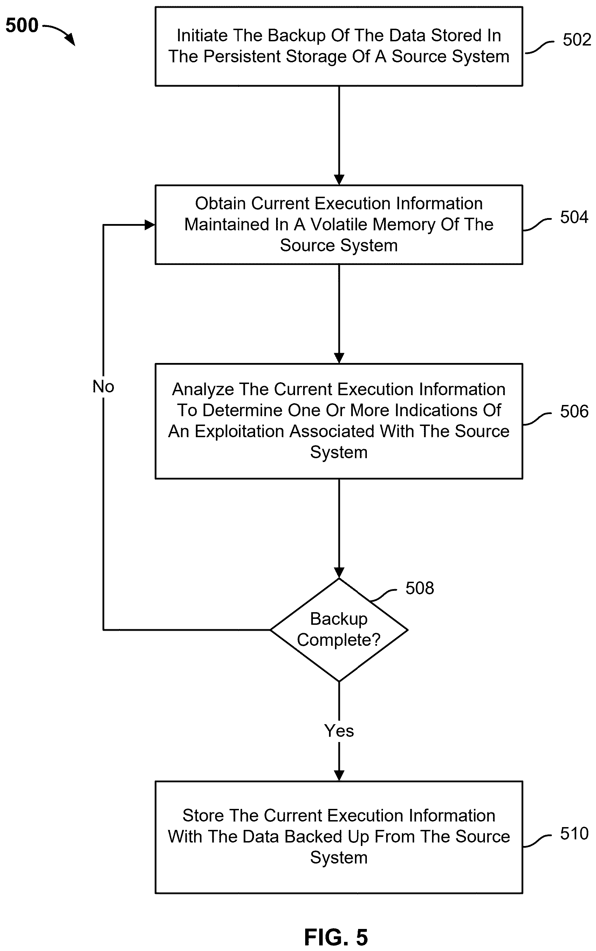

FIG. 5 is a flow diagram illustrating a process for detecting malicious software in accordance with some embodiments. In the example shown, process 500 may be implemented by a storage system, such as storage system 112.

At 502, a backup of data stored in a persistent storage of a source system is initiated. The storage system may send to the source system a command to perform a backup. The backup may be a full backup or an incremental backup.

At 504, current execution information maintained in a volatile memory of the source system is obtained. The storage system may obtain the current execution information associated with the source system via an API call to the source system. The current execution information associated with the source system may include information in the volatile memory, process tables, one or more connections and their corresponding status (active/disabled), one or more current running processes, a list of one or more scheduled processes, a log of one or more recently executed processes, network status information (e.g., open ports), etc.

In some embodiments, the current execution information associated with the source system may be obtained prior to sending the command to perform the backup. In some embodiments, the current execution information associated with the source system may be obtained after a backup of the source system is initiated. In some embodiments, the current execution information associated with the source system may be obtained at one or more additional points in time during the backup of the data stored in the persistent storage associated with the source system. In some embodiments, the current execution information associated with the source system may be obtained after completion of the backup of the data stored in the persistent storage associated with the source system. In some embodiments, the current execution information associated with the source system obtained over a plurality of different points in time may enable the storage system to determine that an indication of an exploitation associated with the source system detected at a later point in time is related to behavior detected at an earlier point in time. In some embodiments, the current execution information associated with source system captured over a plurality of different points in time may enable the storage system to determine that an indication of an exploitation associated with the source system detected at an earlier point in time is related to behavior detected at a later point in time. The storage system may cancel one or more scheduled child processes associated with an exploitive parent process, via an API call, before the one or more scheduled child processes are initiated.

In some embodiments, step 504 may be performed before step 502. In some embodiments, step 504 may be performed in parallel with step 502.

At 506, the current execution information is analyzed to determine one or more indications of an exploitation associated with the source system. The storage system may analyze the obtained current execution information by comparing the obtained current execution information to historical execution information to detect one or more anomalies associated with the obtained current execution information.

The storage system may obtain external threat information from a third party system (e.g., VirusTotal, etc.). In some embodiments, the storage system may analyze the current captured execution information in light of the external threat information.

Obtaining the current execution information associated with the source system at one or more points in time associated with a backup may allow the storage system to determine whether there are one or more indications of an exploitation associated with the source system. In some embodiments, the storage system may determine that there are one or more indications of an exploitation associated with the source system based on the current execution information associated with the source system captured at a single point in time. In some embodiments, the storage system may determine that there are one or more indications of an exploitation associated with the source system based on the current execution information associated with the source system captured over a plurality of different points in time. In some embodiments, the current execution information associated with the source system captured over the plurality of different points in time may enable the storage system to determine that an indication of an exploitation associated with the source system detected at a later point in time is related to behavior detected at an earlier point in time.

At 508, it is determined whether the backup is complete. In response to a determination that the backup is complete, process 500 may proceed to 510. In response to a determination that the backup is not complete, process 500 may return to 504. In some embodiments, step 508 is optional.

At 510, the current execution information is stored with data backed up from the source system.

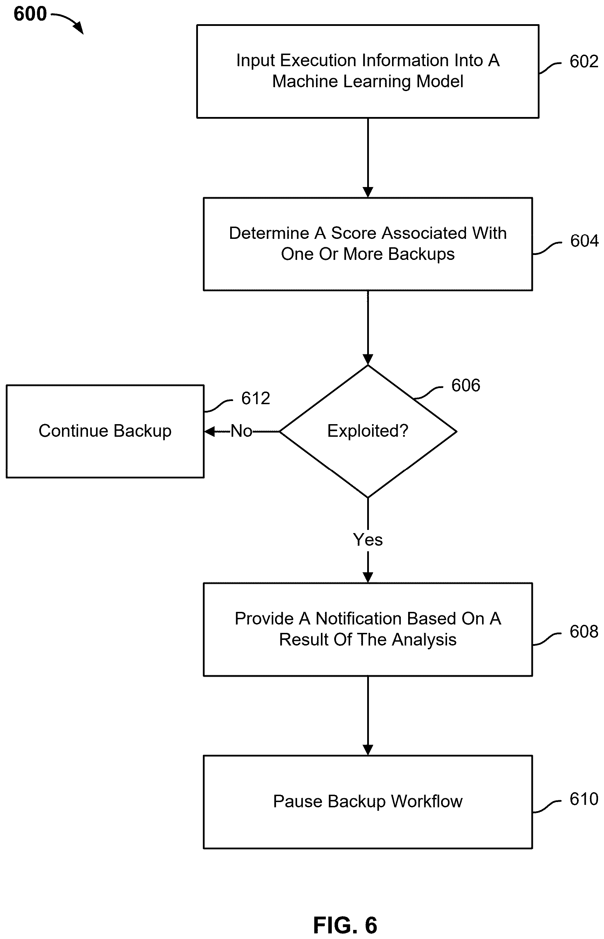

FIG. 6 is a flow diagram illustrating a process of analyzing current execution information in accordance with some embodiments. In the example shown, process 600 may be implemented by a storage system, such as storage system 112. In some embodiments, process 600 may be implemented to perform some or all of step 506 of process 500.

At 602, execution information is inputted into a machine learning model. In some embodiments, the execution information may be associated with a current backup. In some embodiments, the execution information may be associated with a current backup and one or more previous backups.

The machine learning model may be trained using a supervised machine learning algorithm. For example, the supervised machine learning algorithm may be a linear regression algorithm, a logistical regression algorithm, a random forest algorithm, a gradient boosted trees algorithm, a support vector machines algorithm, a neural networks algorithm, a decision tree algorithm, a Naive Bayes algorithm, a nearest neighbor algorithm, or any other type of supervised machine learning algorithm. In some embodiments, the machine learning model may be trained using a semi-supervised machine learning algorithm that utilizes one or more labeled data sets and one or more pseudo-labeled data sets. In some embodiments, the machine learning model may be trained using a reinforcement machine learning algorithm. For example, the reinforcement machine learning algorithm may be a Q-Learning algorithm, a temporal difference algorithm, a Monte-Carlo tree search algorithm, an asynchronous actor-critic agent's algorithm, or any other type of reinforcement machine learning algorithm. In some embodiments, the machine learning model may be trained using an unsupervised machine learning algorithm. For example, clustering methods, anomaly detection, neural network, etc.

At 604, a score associated with one or more backups is determined. In some embodiments, the machine learning model may output the score based on the execution information associated with a current backup. In some embodiments, the machine learning model may output the score based on the execution information associated with a current backup and one or more previous backups.

At 606, it is determined whether the score associated with the backup indicates the source system has been exploited. The score associated with the backup may be compared to an exploitation threshold score. In response to a determination that the score indicates the source system has been exploited (e.g., the score associated with the backup is greater than the exploitation threshold score), process 600 may proceed to 608. In response to a determination that the score does not indicate that the source system has been exploited (e.g., the score associated with the backup is not greater than the exploitation threshold score), process 600 may proceed to 612.

In some embodiments, the score may indicate the source system has been exploited in the event the score associated with the backup is greater than the exploitation threshold score and the score may indicate the source system has not been exploited in the event the score associated with the backup is not greater than the exploitation threshold score.

At 608, a notification based on a result of the analysis is provided. The notification may be provided to a user associated with the source system via a graphical user interface associated with the source system. In some embodiments, the notification may be provided to an external system. In some embodiments, the notification may be provided to the storage system.

At 610, the backup workflow is altered based on a policy. In some embodiments, the policy may indicate that the backup is flagged as being suspicious. In some embodiments, the policy may indicate that a storage destination for the backup is to be modified from a storage system to a sandbox environment. In some embodiments, the policy may indicate that backup is to be paused. In some embodiments, the policy may indicate the backup is to be stored at a remediation system instead of the storage system.

In some embodiments, step 610 is optional.

At 612, a backup workflow is continued.

The invention can be implemented in numerous ways, including as a process; an apparatus; a system; a composition of matter; a computer program product embodied on a computer readable storage medium; a computer-readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Although the foregoing embodiments have been described in some detail for purposes of clarity of understanding, the invention is not limited to the details provided. There are many alternative ways of implementing the invention. The disclosed embodiments are illustrative and not restrictive.

Certain aspects of the present invention are provided with reference to the following clauses:
Clause 1: a method, comprising: receiving an indication to perform a backup of data stored in a persistent storage associated with a source system; in response to the indication to perform the backup, capturing current execution information at least in part maintained in a volatile memory; and causing the captured current execution information to be stored with backup data from the backup of the data stored in the persistent storage.
Clause 2: a method as described by clause 1, wherein the current execution information includes one or more of the following: information in the volatile memory, process tables, one or more connections and their corresponding status, one or more current running processes, a list of one or more scheduled processes, a log of one or more recently executed processes, or network status information.
Clause 3: a method as described by clause 1, wherein the current execution information is obtained from a process table stored in the volatile memory.
Clause 4: a method as described by clause 1, wherein the current execution information is captured at one or more points of time associated with the backup of data stored in the persistent storage associated with the source system.
Clause 5: a method as described by clause 4, wherein the one or more points of time associated with the backup of data stored in the persistent storage associated with the source system include a point in time after the indication has been received.
Clause 6: a method as described by clause 4, wherein the one or more points of time associated with the backup of data stored in the persistent storage associated with the source system include a point in time after initiation of the backup of data stored in the persistent storage associated with the source system.
Clause 7: a method as described by clause 6, wherein the one or more points of time associated with the backup of data stored in the persistent storage associated with the source system include one or more additional points in time after initiation of the backup of data stored in the persistent storage associated with the source system.
Clause 8: a method as described by clause 4, wherein the one or more points of time associated with the backup of data stored in the persistent storage associated with the source system include a point in time after completion of the backup of data stored in the persistent storage associated with the source system.
Clause 9: a method as described by clause 1, further comprising initiating the backup of the data stored in the persistent storage associated with the source system.
Clause 10: a method as described by clause 1, further comprising analyzing the current execution information to determine one or more indications of an exploitation associated with the source system.
Clause 11: a method as described by clause 10, wherein analyzing the current execution information to determine the one or more indications of the exploitation associated with the source system includes inputting the current execution information to a machine learning model.
Clause 12: a method as described by clause 11, wherein analyzing the current execution information to determine the one or more indications of the exploitation associated with the source system includes comparing a score outputted by the machine learning model to an exploitation threshold score.
Clause 13: a method as described by clause 12, wherein analyzing the current execution information to determine the one or more indications of the exploitation associated with the source system includes providing a notification in response to a determination that the score outputted by the machine learning model indicates that the source system has been exploited.
Clause 14: a method as described by clause 12, wherein analyzing the current execution information to determine the one or more indications of the exploitation associated with the source system includes canceling one or more scheduled processes in response to a determination that the score outputted by the machine learning model indicates that the source system has been exploited.
Clause 15: a method as described by clause 12, wherein analyzing the current execution information to determine the one or more indications of the exploitation associated with the source system includes altering a backup workflow for the backup of data stored in the persistent storage associated with the source system in response to a determination that the score outputted by the machine learning model indicates that the source system has been exploited.
Clause 16: a computer program product embodied in a non-transitory computer readable medium and comprising computer instructions for: receiving an indication to perform a backup of data stored in a persistent storage associated with a source system; in response to the indication to perform the backup, capturing current execution information at least in part maintained in a volatile memory; and causing the captured current execution information to be stored with backup data from the backup of the data stored in the persistent storage.
Clause 17: a computer program product as described by clause 16, wherein the current execution information includes one or more of the following: information in the volatile memory, process tables, one or more connections and their corresponding status, one or more current running processes, a list of one or more scheduled processes, a log of one or more recently executed processes, or network status information.
Clause 18: a computer program product as described by clause 16, wherein the current execution information is obtained from a process table stored in the volatile memory.
Clause 19: a computer program product as described by clause 16, wherein the current execution information is captured at one or more points of time associated with the backup of data stored in the persistent storage associated with the source system.
Clause 20: a system, comprising: a processor configured to: receive an indication to perform a backup of data stored in a persistent storage associated with a source system; in response to the indication to perform the backup, capture current execution information at least in part maintained in a volatile memory; and cause the captured current execution information to be stored with backup data from the backup of the data stored in the persistent storage; and a memory coupled to the processor and configured to provide the processor with instructions.
Clause 21: A method for determining an exploitation by malicious software present in a data system, comprising:
   determining that a backup of data stored in a persistent storage associated with a first system to a second system is to be performed;
   in response to determining that the backup is to be performed, capturing information associated with the first system at, at least, a first point in time, wherein the information is at least in part maintained in a volatile memory; and
   analyzing the information to determine one or more indications of an exploitation by malicious software present in the first system.
Clause 22: The method of clause 21, wherein the second system determines that the backup is to be performed, captures the information, and analyzes the information, and wherein the information is captured by the second system via an API call to the first system.
Clause 23: The method of clause 21 or clause 22, wherein analyzing the information comprises:
   inputting the information to a machine learning model;
   receiving a score output by the machine learning model based on the information;
   comparing the score to an exploitation threshold score;
   determining, based on comparing the score to the exploitation threshold score, whether the score indicates an exploitation by malicious software present in the first system or does not indicate an exploitation by malicious software present in the first system.
Clause 24: The method of any of clauses 21 to 23, comprising:
   determining, based on analyzing the information, whether there are one or more indications of an exploitation by malicious software present in the first system; and
   performing one or more actions dependent on determining whether there are one or more indications of an exploitation by malicious software present in the first system.
Clause 25: The method of clause 23 or clause 24, wherein, in response to determining one or more indications of an exploitation by malicious software present in the first system, the one or more actions includes canceling one or more scheduled processes associated with the first system.
Clause 26: The method of any of clauses 23 to 25, wherein, in response to determining one or more indications of an exploitation by malicious software present in the first system, the one or more actions includes altering a backup workflow for the backup .
Clause 27: The method of clause 26, wherein altering the backup workflow includes one or more of the following:
   storing the backup in a sandbox environment;
   providing the backup to a remediation system; or
   pausing or stopping a backup flow associated with performing the backup of the data stored in storage.
Clause 28: The method of clause 24, wherein, in response to determining that there are no indications of an exploitation by malicious software present in the first system, the action includes completing the backup and causing the information to be stored with the backup data at the second system.
Clause 29: The method of any of clauses 21 to 28, wherein the information is first information and wherein analyzing the first information comprises comparing the first information to second information associated with the first system and associated with one or more points in time that are earlier than the first point in time, the one or more indications of an exploitation by malicious software present in the first system being determined based on the comparison.
Clause 30: The method of clause 29, wherein comparing the first information to the second information comprises:
   determining a first relationship between two values based on the first information; and
   comparing the first relationship to a corresponding second relationship determined based on the second information, wherein the one or more indications comprise a divergence between the first relationship and the second relationship.
Clause 31: The method of clause 29 or clause 30, wherein the backup is a first backup and wherein the method comprises, prior to determining that the first backup is to be performed:
   determining that a second backup of data stored in the persistent storage by malicious software present in the first system to the second system is to be performed;
   performing the second backup by storing backup data at the second system;
   capturing the second information associated with the first system, wherein the second information is at least in part maintained in a volatile memory; and
   causing the second information to be stored with the backup data at the second system.
Clause 32: The method of any of clauses 21 to 31, comprising obtaining threat information from a third system, wherein analyzing the information comprises comparing the first information to the threat information.
Clause 33: The method of any of clauses 21 to 32, wherein the information associated with the first system includes one or more of the following: information stored in the volatile memory, one or more process tables, one or more connections and their corresponding status, one or more current running processes, a list of one or more scheduled processes, a log of one or more recently executed processes, or network status information.
Clause 34: A computer program product embodied in a non-transitory computer readable medium and comprising computer instructions for performing the method according to any of clauses 21 to 33.
Clause 35: A system, comprising:
   one or more processors; and
   memory storing instructions, that when implemented by the one or more processor, cause the system to perform the method of any of clauses 21 to 33.

## Claims

1. A computer-implemented method (400) for determining potential backup restore candidates, comprising:
receiving (402) a new threat report indicating one or more known indications of an exploitation;
analyzing (404), based on the new threat report, execution information stored with a backup of a source system (102), wherein:
the execution information was captured at one or more points in time associated with the backup, and
the execution information provides a view of processes at the source system at the one or more points in time associated with the backup;
determining (406), based on the analyzing, whether potential exploitation is detected in the backup; and one of:
in response to a determination that a potential exploitation was detected, marking (408) the backup as potentially vulnerable; or
in response to a determination that a potential exploitation was not detected, marking (410) the backup as a restore candidate.

2. The method of claim 1, wherein the execution information comprises one or more of:
a process table;
one or more network connections and their corresponding status;
a list of one or more currently running processes;
a list of one or more scheduled processes;
a log of one or more recently executed processes; or
network status information.

3. The method of claim 1 or claim 2, wherein the threat information indicates one or more internet protocol, IP, addresses or ports associated with malicious software.

4. The method of claim 3, wherein analyzing the execution information comprises determining whether the source system had a connection with any of the one or more IP addresses or ports included in the new threat report at the one or more points in time associated with the backup.

5. The method of any preceding claim, wherein analyzing the execution information comprises:
inputting the execution information to a machine learning model;
receiving a score output by the machine learning model based on the execution information;
comparing the score to an exploitation threshold score; and
determining, based on comparing the score to the exploitation threshold score, whether the score indicates an exploitation.

6. The method of any preceding claim, wherein analyzing the execution information comprises comparing the execution information stored with the backup to historical execution information associated with one or more previous backups.

7. The method of claim 6, wherein comparing the execution information to the historical execution information comprises:
determining a first relationship between two values based on the execution information; and
comparing the first relationship to a corresponding second relationship determined based on the historical execution information, wherein the potential exploitation is detected based on a divergence between the first relationship and the second relationship.

8. The method of any preceding claim, wherein the backup is included in a plurality of backups of the source system, and wherein analyzing the execution information comprises analyzing execution information stored with the plurality of backups to determine when a change was made to the execution information.

9. The method of claim 8, wherein determining when a change was made comprises determining which backup of the plurality of backups indicates that:
the source system started to have a connection with an IP address included in the new threat report; or
a port of the source system changed from a closed state to an open state.

10. The method of any preceding claim, wherein marking the backup as potentially vulnerable comprises tagging the backup with context information including an identifier of a threat actor or a common vulnerability and exposure, CVE, associated with the new threat report.

11. The method of any preceding claim, wherein analyzing the execution information comprises:
mapping values associated with the execution information to a feature space; and
determining that the potential exploitation is detected when the values are a threshold distance away from a centroid of a cluster formed by values associated with execution information of a plurality of normal backups.

12. The method of any preceding claim, wherein the method is performed by a storage system (112) storing the backup.

13. The method of any preceding claim, wherein the new threat report is received from a third party system.

14. A computer-readable medium comprising instructions that when executed by one or more processors, cause the one or more processors to perform the method according to any of claims 1 to 13.

15. A system (100), comprising:
one or more processors; and
memory storing instructions, that when implemented by the one or more processors, cause the system to perform the method of any of claims 1 to 13.
